# EUROPEAN PATENT APPLICATION

(11) **EP 1 106 389 A1**
(43) Date of publication of application: **13.06.2001**
(21) Application number: 00310727.3
(22) Date of filing: 04.12.2000
(51) Int. Cl.: B60B 7/20

(54) **Improved static plate device and static plate-equipped rotary body**

(30) Priority: 03.12.1999 JP 34543299; 29.03.2000 JP 2000091932
(71) Applicant: Kabushiki Kaisha Shinsei, Odawara-shi, Kanagawa 250-0862 (JP)
(72) Inventor: Matushita, Yuji, Odawara-shi, Kanagawa 250-0056 (JP)
(74) Representative: Lamb, Martin John Carstairs

(57) **Abstract**

A static plate device (10) is mounted on a rotating body (16) so as to maintain a static state without becoming synchronized with a rotation of the rotating body (16). The device (16) includes a static plate (22), a mounting member (18) that mounts the static plate (22) on the rotating body (16), an intermediate member (20) disposed between the static plate (22) and the mounting member (18) so as to support the static plate (22) via a first bearing member (54), the intermediate member (20) being supported by the mounting member (18) via a second bearing member (56), and a weight (50) provided on the static plate (22). The static plate (22) appears to remain stationary even as the rotating body (16) rotates.

## Description

### BACKGROUND OF THE INVENTION

### 1. Field of the Invention

The present invention relates to an improved static plate device and static plate-equipped rotary body.

### 2. Description of the Related Art

Mounting a static plate on a wheel member of a vehicle has been proposed. The lettering displayed on this static plate is such that it can be read even while the vehicle is in motion and the wheel turns, and therefore the static plate can be used as a medium to convey information such as advertisements and so forth, or simply for aesthetic enhancement of the wheel member.

One such type of above-described static plate which can be read even while the vehicle is in motion is one that makes use of the residual image effect of the human eye, and involves a simple structure in which the static plate is given a special curved surface and uses lettering readable at only a certain angle of rotation of the wheel, at which angle the lettering appears to remain still. Or, alternatively, a special arrangement has been proposed in which a strobe unit is disposed opposite the static plate and the flashing of the strobe light and the rotation of the vehicle wheel are synchronized, so that it is possible to see the lettering displayed on the display plate as if it were stationary.

By contrast, another composition has been proposed in which the static plate is not synchronized with the rotation of the wheel while the vehicle is in motion but actually remains stationary with respect thereto so as to be readable in such state, and consists of a structure in which a fixed member mounted to the wheel portion and a static plate are slidingly joined together via a single bearing assembly, and further provided with a weight on the static plate to stabilize the static plate in the static position.

However, a drawback of the conventional arrangements as described above is that, in the case of those compositions making use of the residual image effect of the human eye, the lettering on the static plate cannot be read clearly and distinctly, with the result that the static plate cannot function to maximum effect as either a medium of communication or as an aesthetic design. On the other hand, in those conventional arrangements in which the static plate remains stationary with respect to the wheel, it sometimes happens that the static plate rotates or vibrates when the vehicle undergoes acceleration or braking, with the result that, as described above, the lettering cannot be read clearly and distinctly and hence the static plate cannot function to maximum effect as either a medium of communication or as an aesthetic design. Additionally, when it rains it can happen that mud and water get between the wheel and the static plate and cause the wheel and the static plate to stick together, with the same undesirable result that the static plate rotates with the wheel and the lettering cannot be read.

### SUMMARY OF THE INVENTION

Accordingly, it is an object of the present invention to provide an improved and useful static plate device and static plate-equipped rotary body in which the above-described disadvantages are eliminated.

The above-described object of the present invention is achieved by a static plate device mounted on a rotating body so as to maintain a static state without becoming synchronized with a rotation of the rotating body, the static plate device comprising:
a static plate;
a mounting member that mounts the static plate on the rotating body;
an intermediate member disposed between the static plate and the mounting member so as to support the static plate via a first bearing member, the intermediate member being supported by the mounting member via a second bearing member; and
a weight provided on the static plate.

According to this aspect of the invention, the rotational motion of the axle, which is transmitted to the mounting member, is prevented from reaching the static plate because of the presence of the intermediate member and the two bearing members, and as a result the static plate can be stably maintained in a static state, and accordingly, its value when used as a medium for transmitting information such as advertising or as an aesthetic design is enhanced.

The above-described object of the present invention is also achieved by a static plate device mounted on a rotating body so as to maintain a static state without becoming synchronized with a rotation of the rotating body, the static plate device comprising:
a static plate;
a mounting member mounted on the rotating body that mounts the static plate;
an intermediate member disposed between the static plate and the mounting member so as to support the static plate via one bearing member, the intermediate member being supported by the mounting member via another bearing member; and
a gear,
the intermediate member being formed in the shape of a gear and provided with a weight, the static plate being formed in the shape of a gear and provided with a weight, the gear meshing with the intermediate member and the static plate so as to revolve about an axial line of the mounting member.

The above-described object of the present invention is also achieved by a static plate device mounted on a rotating body so as to maintain a static state without becoming synchronized with a rotation of the rotating body, the static plate device comprising:
a static plate;
a mounting member mounted on the rotating body that mounts the static plate;
an intermediate member disposed between the static plate and the mounting member so as to support the static plate via a first bearing member, the intermediate member being supported by the mounting member via a second bearing member; and
a gear rotatably supported by the intermediate member,
the intermediate member being provided with a first weight, the static plate being formed in the shape of a gear and mounting a second weight, the gear engaging the static plate.

The above-described object of the present invention is also achieved by a rotating body device mounting a rotating body so as to maintain a static state without becoming synchronized with a rotation of the rotating body, the rotating body comprising:
a static plate;
a mounting member that mounts the static plate on the rotating body;
an intermediate member disposed between the static plate and the mounting member so as to support the static plate via a first bearing member, the intermediate member being supported by the mounting member via a second bearing member; and
a weight provided on the static plate.

Other objects, features and advantages of the present invention will become apparent from the following detailed description when read in conjunction with the accompanying drawings.

### BRIEF DESCRIPTION OF THE DRAWINGS

FIGS. 1A and 1B are diagrams of an improved static plate device according to a first embodiment of the present invention, in which FIG. 1A is a lateral cross-sectional view and FIG. 1B is a cross-section along a line (b)-(b) in FIG. 1A;
FIG. 2 is a partial lateral cross-sectional view of a first variation of the static plate device according to a first embodiment of the present invention;
FIG. 3 is a partial lateral cross-sectional view of a second variation of the static plate device according to a first embodiment of the present invention;
FIG. 4 is a partial lateral cross-sectional view of a third variation of the static plate device according to a first embodiment of the present invention;
FIG. 5 is diagram illustrating a method for mounting the static plate device to the wheel member;
FIG. 6 is a partial lateral exterior view of a four-wheeled vehicle (a rotating body unit) having the static plate device 10, 10a-10d according to the structure described above;
FIGS. 7A and 7B are a lateral cross-sectional view of the wheel mark and an exploded side view of the wheel mark assembly, respectively, of a wheel mark according to a second embodiment of the present invention;
FIG. 8 is a front view of the mounting member of the wheel mark according to the second embodiment of the present invention;
FIG. 9 is a front view of the mounting member of the intermediate member, gear and display plate in an assembled state of the wheel mark according to the second embodiment of the present invention;
FIG. 10 is a lateral cross-sectional view of the wheel mark according to a first variation of the second embodiment of the present invention; and
FIG. 11 is a lateral cross-sectional view of the wheel mark according to a second variation of the second embodiment of the present invention.

### DETAILED DESCRIPTION OF THE INVENTION

A detailed description will now be given of embodiments of the static plate device according to the present invention, with reference to the accompanying drawings. It should be noted that identical or corresponding elements in the embodiments are given identical or corresponding reference numbers in successive drawings, with detailed descriptions of such elements given once and thereafter omitted.

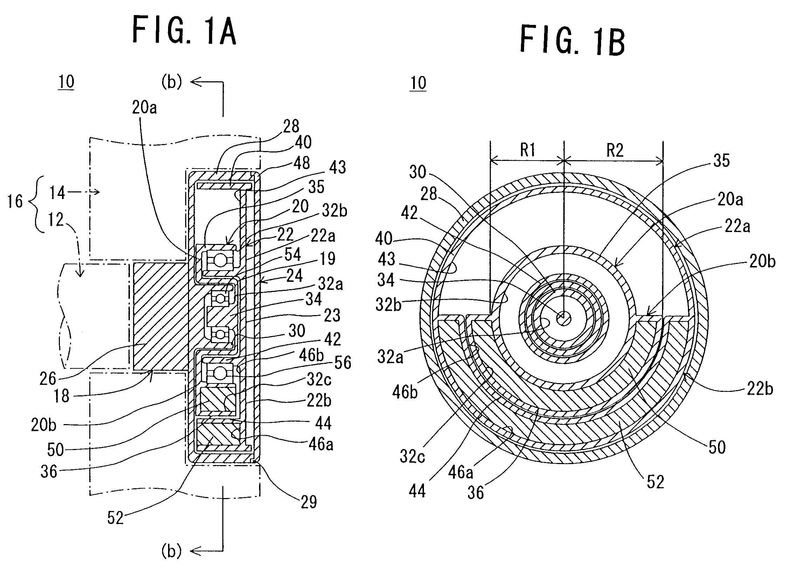

FIGS. 1A and 1B are diagrams of an improved static plate device according to a first embodiment of the present invention, in which FIG. 1A is a lateral cross-sectional view and FIG. 1B is a cross-section along a line (b)-(b) in FIG. 1A.

As shown in the diagrams, the static plate device 10 is affixed to a wheel member (rotating body) 16 composed of an axle 12 and a wheel 14, a mounting member 18 mounted on the wheel member, an intermediate member (rotation cutoff collar) 20 mounted on the mounting member 18, a static plate 22 mounted on the intermediate member 20, and a case (cover member) 24 covering the static plate 22.

For ease of explanation, a description of a method for mounting the static plate device 10 to the wheel member 16 will be deferred. Instead, a description will now be given of the structure of the static plate device 10 and its assembly.

The mounting member 18 comprises a shaft member 26, a cylindrical portion 28 extending coaxially from the shaft member 26 and having a diameter larger than that of the shaft member 26, and a cylindrical portion 30 extending coaxially from the shaft member 26 and having a diameter smaller than that of the shaft member 26. A notched portion 29 is cut into an edge of an outer periphery of the cylindrical portion 28.

The intermediate member 20 comprises a disc having an uneven surface, the disc having a generally W-shaped cross-section. An upper section 20a of the intermediate member 20 has a radius R1, the radius R1 being smaller than a radius R2 of a lower section 20b of the intermediate member 20, as can be seen most clearly in FIG 1B. Accordingly, the periphery of the intermediate member is stepped. The intermediate member 20 has a projection 34 that engages a concave portion 32a formed in a rear surface of a central convex portion 19.

Additionally, a peripheral lip 35 is formed on an outer periphery of the intermediate member 20, as a result of which a concave portion 32b is formed between the peripheral lip 35 and the convex portion 19. The lower section 20b is further provided with an annular projection 36 on a periphery of the peripheral lip portion 35, as a result of which an annular concave portion 32c is formed between the peripheral lip portion 35 and the annular projection 36.

The static plate 22 is substantially a disc having a peripheral wall portion 40 and a central cylindrical projection 42. The static plate 22 further comprises a lower section 22b having the peripheral wall portion 40 and the cylindrical portion 42, between which an annular projection 44 is formed. As a result, an annular concave portion 43 is formed on an upper section 22a between the peripheral wall portion 40 and the cylindrical portion 42, and at the same time two annular concave portions 46a, 46b of different widths are formed in the lower section 22b. It should be noted that lettering for a commercial or the like appears on a front surface 23 of the static plate 22.

The case 24 is substantially a disc, around a periphery of which a rectangular wall 48 is formed.

Optimally, the above-described mounting member 18, intermediate member 20, static plate 22 and case 24 are made of a resin material, with the case 24 in particular being formed of a clear plastic material. However, the choice of material is not limited to resin, and, except for the case 24, it is possible to use a light metal material or metal alloy material.

As shown in FIG. 1B, a semicircular disc of a weight 50 is provided within the concave portion 32c in the lower section 20b of the intermediate member 20. Additionally, a similar semicircular disc of a weight 52 is provided within the annular concave portion 46a formed in the lower section 22b of the static plate 22. It should be noted that rolling bearings 54, 56, a description of which will be given later, are not shown in FIG. 1B.

Next, a description will now be given of assembly of the above-described static plate device 10.

The running roller 54 described above is attached to an inner side of the cylindrical portion 30 of the mounting member 18, and the projection 34 of the intermediate member 20 (which is already provided with the weight 50) is then fitted to the rolling bearing 54, as a result of which the intermediate member 20 is then supported by the mounting member 18.

Next, the rolling bearing 56 is attached to the concave portion 32c in the intermediate member 20, and the cylindrical portion 42 of the static plate 22 (to which the weight 52 is already attached) is then fitted to the rolling bearing 56, as a result of which the static plate 22 is supported by the intermediate member 20.

Next, the walls 48 of the case 24 fit over and around the notched portion 29 of the mounting member 18, and the case 24 thus covers the mounting member 18. As a result, the mounting member 18, the intermediate member 20, and the static plate 22 form a single assembly via the rolling bearings 54, 56, so that these constituent parts and the gaps therebetween are covered and enclosed by the case 24.

The material from which the rolling bearings 54, 56 are made can be chosen as appropriate from an array of materials including heat- and weather-resistant resin, aluminum, aluminum alloy, titanium, titanium alloy, glass fiber reinforced plastic, ordinary stainless steel and special use stainless steel.

A description will now be given of a static plate device according to a first variation of the first embodiment of the present invention.

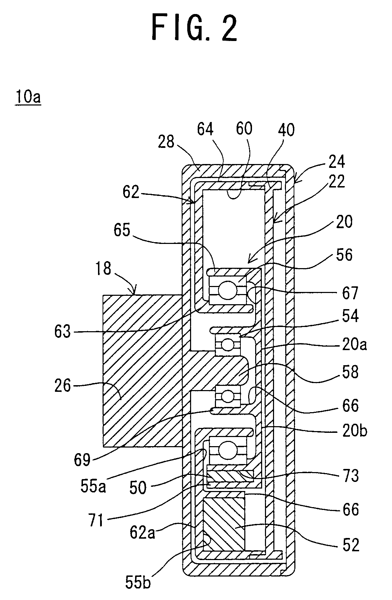

FIG. 2 is a partial lateral cross-sectional view of a first variation of the static plate device according to a first embodiment of the present invention. It should be noted that in this and the following embodiments, the combination of the constituent elements of the static plate device composed of the mounting member 18, the intermediate member 20, the static plate 22 and the case 24 is essentially unchanged from that of the first embodiment as described above, and hence a detailed description thereof is omitted.

The static plate device 10a according to the first variation of the first embodiment of the present invention differs from the static plate device 10 according to the first embodiment of the present invention on the following points.

Instead of the cylindrical portion 30 of the first embodiment of the present invention, a projection 58 is formed on the shaft member 26 of the mounting member 18.

Additionally, the intermediate member 20 is substantially a disc having an essentially flat cross-section, as compared to the W-shaped uneven cross-section of the intermediate member 20 of the first embodiment as described above. As with the intermediate member 20 according to the first embodiment, the intermediate member 20 according to the variation of the first embodiment has an upper section 20a having a diameter larger than that of a lower section 20b, with a periphery thereof stepped. The intermediate member 20 is further provided with an annular wall portion 65 on a periphery of the intermediate member 20 and a central cylindrical portion 69. As a result, an annular concave portion 67 is formed between the wall portion 65 and the cylindrical portion 69. The lower section 20b is further provided with an annular projection 71 on the periphery of the wall portion 65, as a result of which an annular concave portion 73 is formed between the projection 71 and the wall portion 65. The weight 50 is mounted in the concave portion 73.

An edge of an outer wall 64 of a hollow cylindrical member 62 is fixedly mounted to the rectangular-shaped peripheral wall portion 40 of the static plate 22, thus forming a single assembly with the static plate 22. The hollow cylindrical member 62 is formed of an inner wall 63 and the outer wall 64, as a result of which a relatively wide annular concave portion 60 is formed. The concave portion 60 of a lower section 62a is further provided with a single annular projection 66, thus dividing the annular concave portion 60 into annular concave portions 55a and 55b.

The weight 52 is provided on the annular concave portion 55b. In this case, the weight 52 is substantially heavier than the weight 50 but it need not necessarily be so. An arrangement is also possible in which the weight 50 is heavier than the weight 52.

In the static plate device 10a according to the first variation of the first embodiment of the present invention, the projection 58 of the mounting member 18 and the cylindrical portion 69 of the intermediate member 20 engage each other via the rolling bearing 54. The inner wall 63 of the hollow cylindrical member 62 and the annular wall portion of the intermediate member 20 engage each other via the rolling bearing 56.

It should be noted that, in this case, with respect to the assembly and installation of each member, the hollow cylindrical member 62 is provided on the inside of the cylindrical portion 28 and the mounting member 18, with the rolling bearing 56 mounted on the cylindrical portion 28. Then, after the intermediate member 20 is mounted simultaneously on the mounting member 18 and the hollow cylindrical portion 62, the hollow cylindrical portion 62 and the static plate 22 are joined together.

Next, a description will be given of a static plate device according to a second variation of the first embodiment of the present invention.

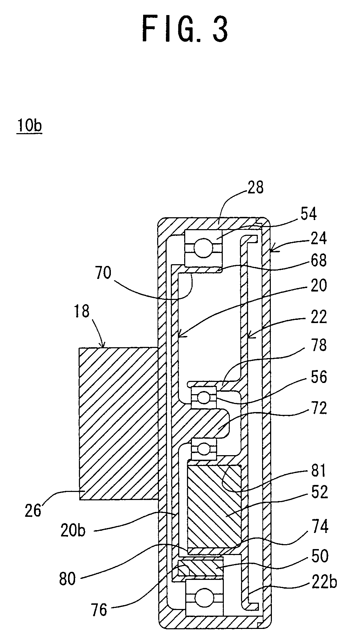

FIG. 3 is a partial lateral cross-sectional view of the second variation of the static plate device according to the first embodiment of the present invention.

As shown in FIG. 3, the static plate device lOb is configured such that only the cylindrical portion 28 extends coaxially from the shaft member 26 on the mounting member 18.

The intermediate member 20 is substantially a disc, with an annular projection 68 around an outer periphery thereof, by which is formed a concave portion 70. A projection 72 is formed in the center of the concave portion 70. An annular projection 74 is provided on the concave portion 70 of the lower section 20b, which forms an annular concave portion 76, with the weight 50 mounted on the annular concave portion 76.

The static plate 22 is substantially a disc, with a cylindrical portion 78 mounted on a central portion thereof and an annular projection 80 formed on the lower section 22b. The cylindrical portion 78 and the projection 80 together form an annular concave portion 81, with the weight 52 mounted to the annular concave portion 81.

In the static plate device lOb according to the second variation as described above, the intermediate member 20 is mounted inside the rolling bearing 54, which in turn is mounted on the mounting member 18. The static plate 22 is then mounted around the outside of the rolling bearing 56 which in turn surrounds the projection 72 formed in the center of the concave portion 70. Accordingly, the cylindrical portion 28 of the mounting member 18 (which, as the rotating axis, is fixedly mounted to and rotated by the wheel member which is in turn urged by a motive force), is positioned at an outermost circumference, with the intermediate member 20 and the static plate 22 positioned on an inner side thereof via the rolling bearings 54, 56.

Next, a description will be given of a third variation of the static plate device according to a first embodiment of the present invention.

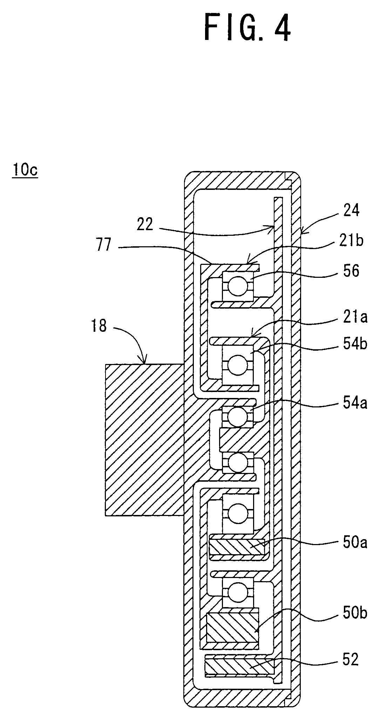

FIG. 4 is a partial lateral cross-sectional view of the third variation of the static plate device according to the first embodiment of the present invention.

As shown in FIG. 4, the static plate device 10c uses the static plate device 10a according to the first variation as the basic configuration, with the difference that a second intermediate member is used to separate the static plate 22 from the central cylindrical member 62, such that the static plate is mounted via a rolling bearing.

In other words, a first intermediate member 21a is mounted on the fixed member 18 via a first rolling bearing 54a, and further, a second intermediate member 21b is mounted via a second rolling bearing member 54b, with the static plate 22 mounted to the rolling bearing 54b via the intermediate member 21a. It should be noted that weights 50a, 52 are provided on the intermediate member 21a and the static plate 22, and further, weight 50b is provided on intermediate member 21b.

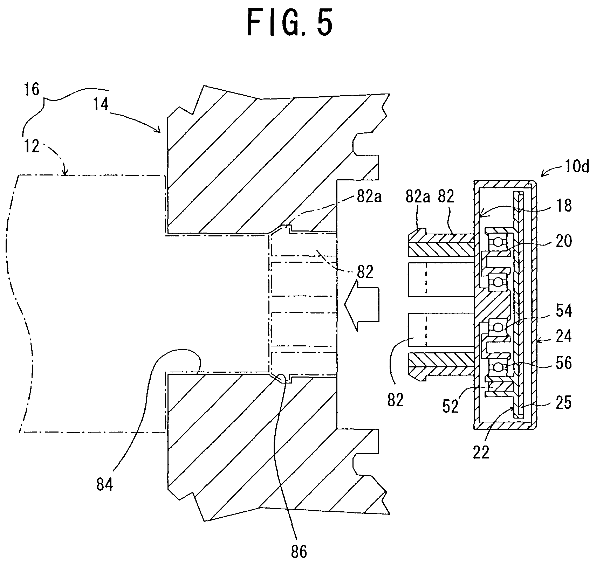

Next, a description will be given of a method for mounting static plate devices 10, 10a, lOb and 10c described above onto the wheel member 16, with reference to FIG. 5.

FIG. 5 is diagram illustrating a method for mounting the static plate device on the wheel member.

In this case, the structural elements of static plate device 10d are similar to those of the first embodiment and the first variation of the embodiment as shown in FIGS. 1A, 1B and 2 above, with the exception that the central hollow cylindrical portion is formed on the intermediate member 20, and the rolling bearing 54 is mounted inside the cylindrical portion and the rolling bearing 56 is mounted outside the bearing portion. Accordingly, the mounting member 18, the intermediate member 20 and the static plate 22 are set in that order, so the entire assembly is more easily mounted on the wheel member 16 than the static plate device 10a according to the second variation. It should be noted that a display plate 25 is detachably mounted on the static plate 22, and further, the intermediate member 20 weight is eliminated, with only the weight 52 remaining mounted on the static plate 22.

In place of the shaft member 26 of the first embodiment and the variations thereof described above, the mounting member 18 is provided with a cylindrical, or annular, projection 82 composed of a flexible material in which a plurality of slits are formed. An annular laterally projecting lip 82a is formed on a periphery of the projection 82.

As described above, the static plate device 10d is configured so that the mounting member 18, the intermediate member 20, the static plate 22 and the case 24 form a single integrated unit, so keeping such a static plate device 10d ready makes it possible to attach same to the wheel member 16 quickly and easily.

It should be noted that it is more desirable that the small-diameter axis of the mounting member 18 that rotates in synchrony with the wheel member 16 (shown as the projection 58 in FIG. 2) is centrally disposed and the intermediate member 20 and the static plate 22 disposed in order around the periphery of the projection 58, as with the static plate device 10d shown in FIG. 5 and the static plate device 10a shown in FIG. 2, than to dispose the large-diameter axis of the mounting member 18 (shown as the cylindrical portion 28) on an outermost periphery and mounting the intermediate member 20 and the static plate 22 on an inner side thereof, as with the static plate device 10b shown in FIG. 3.

At the same time, the wheel member 16 has a stepped through-hole 84 formed in a center of the wheel 14 fixed on the axle 12, with an annular concave portion 86 having a tapered opening formed at a small-diameter portion of the through-hole 84.

In order to fixedly mount the wheel member 16 on the static plate device 10d, the projection 82 of the static plate device 10d is bent inward and in such state inserted into the through-hole 84. Once inserted, the bend in the flexible projection 82 disappears and the projection 82 returns to its normal state, with the projecting lip 82a engaged by the annular concave portion 86, and the static plate device 10d fixedly mounted on the wheel member 16. In this case, the static plate 22 has approximately the same diameter as or a slightly larger diameter than the center cap that is typically provided. It should be noted that when the shaft member 26 is formed on the mounting member 18 in the first embodiment as well as other embodiments of the present invention, the shaft member 26 can be mounted on the wheel 14 using screws or some other appropriate engaging means.

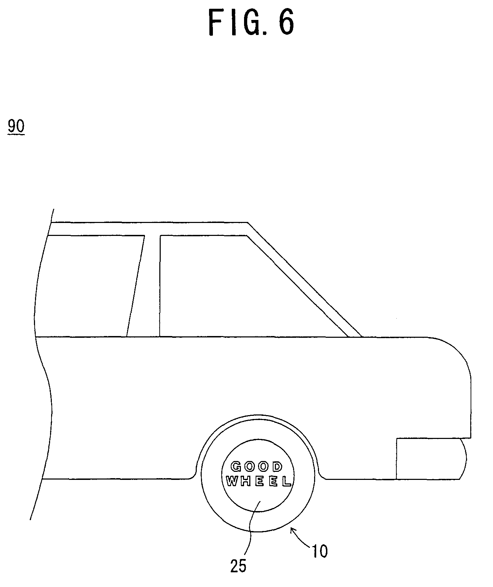

FIG. 6 is a partial lateral exterior view of a 4-wheeled vehicle (a rotating body unit) having the static plate device 10, 10a-10d according to the structure described above. Unlike the embodiment shown in FIG. 5, the display plate 25 has a relatively large diameter, extending to the inner edge of the part of the wheel 14 to which the tire is attached.

In the above-described static plate device 10, 10a-10d according to the present invention and the 4-wheeled vehicle 90 as described above, virtually none of the rotational movement of the axle 12 transmitted to the mounting member 18 is transmitted to the intermediate member 20 via the rolling bearing 54, and additionally, not even slight vibrations of the intermediate member 20 are transmitted to the static plate 22 via the rolling bearing 56. As a result, the static plate can be stably maintained in a static state, and accordingly, its value when used as a medium for transmitting information such as advertising or as an aesthetic design is enhanced. In this case, by providing a plurality of intermediate members 21a and 21b, with rolling bearings 54b disposed between the first and second intermediate members 21a, 21b as with the embodiment shown in FIG. 4, the static plate 22 can be more securely maintained in a static state. It should be noted that in this case it is desirable to make all of the bearing members rolling bearings in order to further reduce the starting friction and dynamical friction, though it is also possible to replace some or all of the rolling bearings with sliding bearings, with the sliding surfaces of the bearings machined to a high degree of smoothness.

Additionally, because the weight 52 is mounted on the static plate 22 and, further, one or more weights 50, 50a and 50b are mounted as appropriate on the intermediate member 20, any rotation of the static plate 22 can be more securely prevented, and any shaking of the static plate 22, should it occur, can be quickly attenuated.

Additionally, each of the mounting member 18, the intermediate member 20, and the static plate 22 is enclosed by a transparent case 24, so dirt, dust and so forth cannot directly attach itself to and obscure the display plate 25, and moreover dirt and dust cannot get into the cracks between individual members.

As will be appreciated by those of skill in the art, the static plate device is not limited to the above-described embodiments and variations thereof, but as a method for fixedly mounting the static plate device to the wheel member it is possible to use screws and a variety of other engaging means. Additionally, in place of the above-described static plate devices comprising a mounting member, intermediate member, static plate and case integrated so as to form a single integrated unit, these individual members may be attached in order to the wheel member. Additionally, in place of the embodiments and variations thereof described above, in which the individual members and the bearing members as a whole are enclosed by a case, it is also possible to mount each of these individual members on the wheel member in order. Additionally, in place of the above-described embodiment, in which each of the members as well as the bearings are enclosed by a case, it is also possible to partially seal the gaps between the members as well as the bearing members. In this case, by installing the intermediate member and the static plate at a location at which magnets installed on the intermediate member and the static plate and having magnetic poles inverted relative to each other are brought near each other, the magnetic repellant force so generated can further enhance the effect of the present invention.

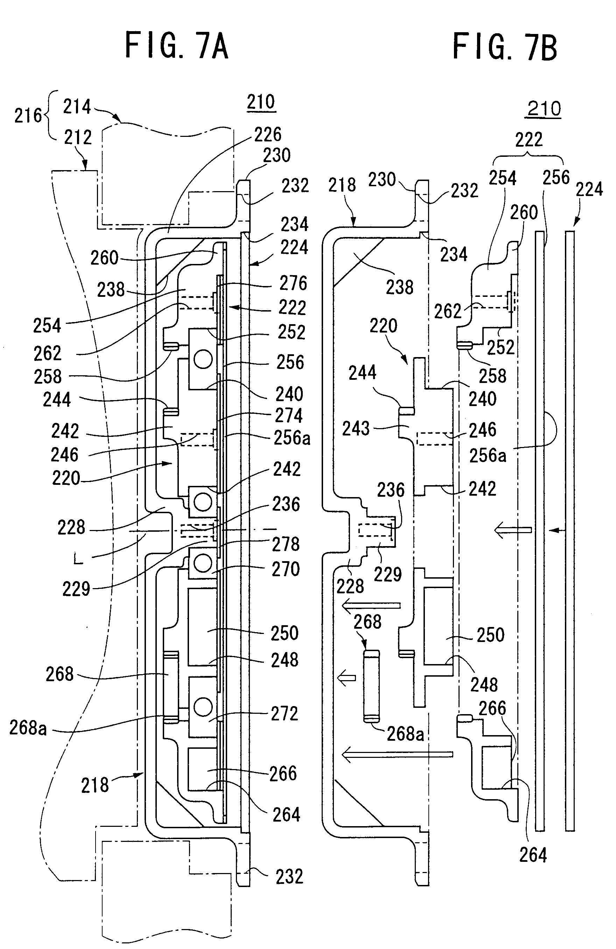

A description will now be given of a static plate device (hereinafter referred to as a wheel mark) according to a second embodiment of the present invention, with reference to FIGS. 7A, 7B, 8 and 9.

FIGS. 7A and 7B are a lateral cross-sectional view of the wheel mark and an exploded side view of the wheel mark assembly, respectively, of a wheel mark according to a second embodiment of the present invention.

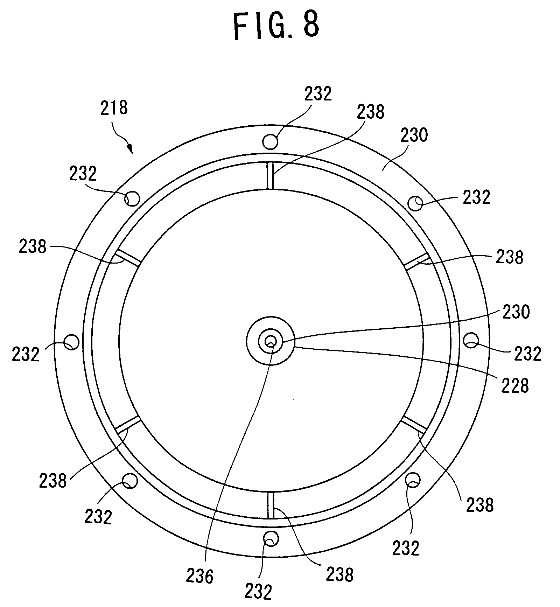

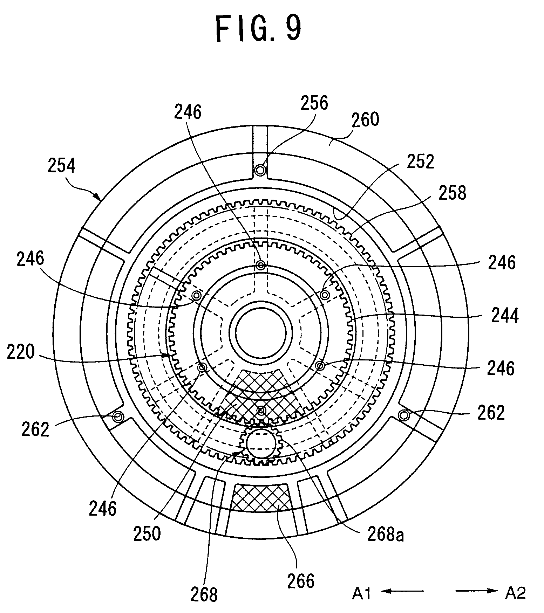

FIG. 7A shows a lateral cross-sectional view along a central portion of the wheel mark 210. FIG. 7B eliminates some portions of the wheel mark assembly. FIG. 8 is a front view of the mounting member of the wheel mark according to the second embodiment of the present invention, that is, the view of FIG. 7A as seen from a right side. FIG. 9 is a front view of the mounting member of the intermediate member, gear and display plate in an assembled state of the wheel mark according to the second embodiment of the present invention, that is, the view of FIG. 7A as seen from a left side.

As shown in FIG. 7A and 7B, the wheel mark 210 is used in a state in which it is fixedly mounted on the wheel member 216, the wheel member 216 comprising an axle 212 and a wheel 214 mounted on the axle 212. The wheel mark 210 comprises a mounting member 218 mounted to the wheel member 216, an intermediate member (rotation interruption collar) 220 mounted on the mounting member 218, a display plate 222 mounted on the intermediate member 220, and a case member 224 that covers the display plate 222.

The mounting member 218 is essentially a disc having an outer rim 226, with an inwardly projecting convex portion 228 formed in a center thereof and a shaft 229 provided on a center of the convex portion 228. The outer rim 226 is provided with a plurality of reinforcing ribs 238, a flange 230 is provided on a tip of the rim 226, and a plurality of bolt through-holes 232 are provided on the flange 230. Additionally, a notched portion 234 is provided where the tip of the rim 226 meets the flange 230, and the shaft 229 is provided with a hole 236 for attaching a bolt.

The intermediate member 220 is essentially a thick, low ring, with a stepped portion 240 formed at a periphery along one lateral surface thereof and a stepped through-hole portion 242 formed in a center. A plurality of holes 246 for mounting bolts are formed in the same annular surface between the through-hole portion 242 and the outer periphery. On the other lateral surface of the intermediate member 220a an annular projection 243 is formed, the circular projection 243 being concentric with but having a wider diameter than that of the through-hole portion 242. An annular gear 244 is formed around the periphery of the annular projection 243, so that the intermediate member 220 is configured essentially in the shape of a gear. Additionally, a concave portion 248 for accommodating a weight 250 is formed in what appears in FIG. 7 as a lower part of the intermediate member 220, the weight 250 being fixedly mounted thereto.

In this case, the display plate 222 comprises a cylindrical member 254 having a stepped through-hole portion 252 in a center of the display plate 222. The cylindrical member 254 is provided with a plurality of holes 262 for mounting bolts. A flange 260 extends from an outer periphery of the cylindrical portion 254. An annular gear 258 is formed on an inner periphery of a narrow side of the through-hole portion 252. Accordingly, the cylindrical member 254 is formed essentially in the shape of a gear, with a concave portion 264 formed in a lower portion of the cylindrical member 254. A weight 266 is fitted into the concave portion 264 and fixedly mounted thereto. It should be noted that a front surface 256a of the disc member 256 is used for example to display lettering for advertisements and the like.

A gear 268 is provided between the intermediate member 220 and the display plate 222. Teeth 268a of the gear 268 engage the gear 244 of the intermediate member 220 when the wheel mark 210 is in an assembled state and the gear 258 of the display plate 222 (cylindrical member 254), thus joining the intermediate member 220 and the display plate 222 to each other.

The case 224 is essentially a disc.

The materials from which the above-described members are made may for example be PC resin and ABS resin in the case of the mounting member 218, the intermediate member 220, the display plate 222 and the gear 268. Additionally, PC resin and ABS resin can be used for the case 224 as well, though a highly transparent PC resin is optimal. In addition, except for the case 224, light metals or light metal alloys may be used. Brass, for example, may be used for the weights 250, 266.

A description will now be given of the assembled structure of the wheel mark 210 configured as described above.

Initially, a rolling bearing 270 is provided on an outside of the shaft 229 of the mounting member 218. The intermediate member 220 to which the weight 250 has already been attached is then pressed down upon the rolling bearing 270, thus having the intermediate member 220 supported by the mounting member 218 via the rolling bearing 270.

Between the mounting member 218 and the intermediate member 220, a gear 268 is sandwiched between the teeth 268a and the teeth 244, with a roller bearing (bearing member) 272 attached to the outside of the intermediate member 220. Further, the gear 258 and the teeth 268a are made to mesh and the display plate 222 (to which the weight 266 is already attached) is installed on the rolling bearing 272. In so doing, the display plate 222 is supported by the intermediate member 220 via the rolling bearing 272, and at the same time the teeth 268a of the gear 268 engage the gears 244, 258 of the intermediate member 220 and the display plate 222.

A bolt not shown in the diagram is inserted through an annular sealed chamber member 278 and fitted to a bolt hole 236 in the mounting member 218 in order to attach the annular sealed chamber member 278 and seal in the rolling bearings 270, 272. Similarly, a bolt not shown in the diagram is inserted through an annular sealed chamber member 274 and fitted to a bolt hole 246 in the intermediate member 220, thereby attaching the annular sealed chamber member 274, and, additionally, a bolt not shown in the diagram is inserted through an annular sealed chamber member 276 and fitted to a bolt hole 262 in the display plate 222, thereby attaching the sealed chamber member 276. It should be noted that the sealed chamber members 274, 276, 278 may be made of special use stainless steel.

The outer periphery of the case 224 is fitted to the notched portion 234 of the mounting member 218 by an appropriate method, thereby mounting the case 224 on the mounting member 218.

As described above, the mounting member 218, intermediate member 220 and display plate 222 are formed into a single integrated unit through the intervention of the rolling bearings 270, 272, with the members, the gear 268 and the gaps between the members covered and sealed by the case 224.

The material from which the above-described rolling bearings 270, 272 are made can be chosen as appropriate from an array of materials, including heat- and weather-resistant resin, aluminum, aluminum alloy, titanium, titanium alloy, glass fiber reinforced plastic, ordinary stainless steel and special use stainless steel.

In the wheel mark 210 assembled as described above, inserting a bolt not shown in the diagram through a bolt passage hole 232 in the mounting member 218 so as to engage the wheel 214 serves to mount the wheel mark 210 on the wheel member 216. Accordingly, by readying a number of such assembled wheel marks 210 in advance it is possible to attach same to the wheel member 216 quickly and easily.

A description will now be given of the practical benefits of the wheel mark 210 configured as described above.

The rotational motion of the axle 212 is transmitted as is to the mounting member 218 connected directly to the axle 212 or the wheel 214. However, virtually nothing of this rotary motion is transmitted to the intermediate member because of the interposition of the rolling bearing 270, and even if the intermediate member 220 vibrates slightly, virtually none of this vibration reaches the display plate 222 because of the interposition of the rolling bearing 272. Accordingly, the transmission of the rotary movement of the axle 212 is prevented from reaching the display plate 222, and thus the display plate can be stably maintained in a static state and, accordingly, its value when used as a medium for transmitting information such as advertising or as an aesthetic design is enhanced. It should be noted that in this case it is desirable to make all of the bearing members rolling bearings in order to further reduce the starting friction and dynamical friction, though it is also possible to replace some or all of the rolling bearings with sliding bearings, with the sliding surfaces of the bearings machined to a high degree of smoothness.

Additionally, because the weight 266 is mounted on the static plate 22 and, further, the weight 250 is mounted on the intermediate member 220, any rotation of the static plate 22 can be more securely prevented, and any shaking of the static plate 22, should it occur, can be quickly attenuated.

Additionally, when a vehicle bearing the wheel mark 210 accelerates or decelerates, for example during the process of accelerating when the vehicle is moving in a direction indicated in FIG. 9 by arrow A1, the intermediate member 220 and the display plate 222 mounting the weights 250 and 266 may undergo counter-clockwise rotation toward the rear of the wheel member 216 (a direction indicated in FIG. 9 by arrow A2) due to inertial force. However, the gear 268 that meshes with the intermediate member 220 and the display plate 22 spins freely about an axial line L of the mounting member 218, or, in other words, serves to offset the rotational force of the intermediate member 220 or the display plate 222 by rotating about an outer periphery of the intermediate member 220. As a result, regardless of the size of the weights and the size of the rotational torque, the intermediate member 220 and the display plate 222 quickly reach a static state from either side.

Additionally, with the wheel mark 210 as described above, each of the mounting member 218, the intermediate member 220, and the static plate 222 is enclosed by a transparent case 224, so dirt, dust and so forth cannot directly attach itself to and obscure the surface 256a, and moreover dirt and dust cannot get into the cracks between individual members, including the bearings and the gear 268.

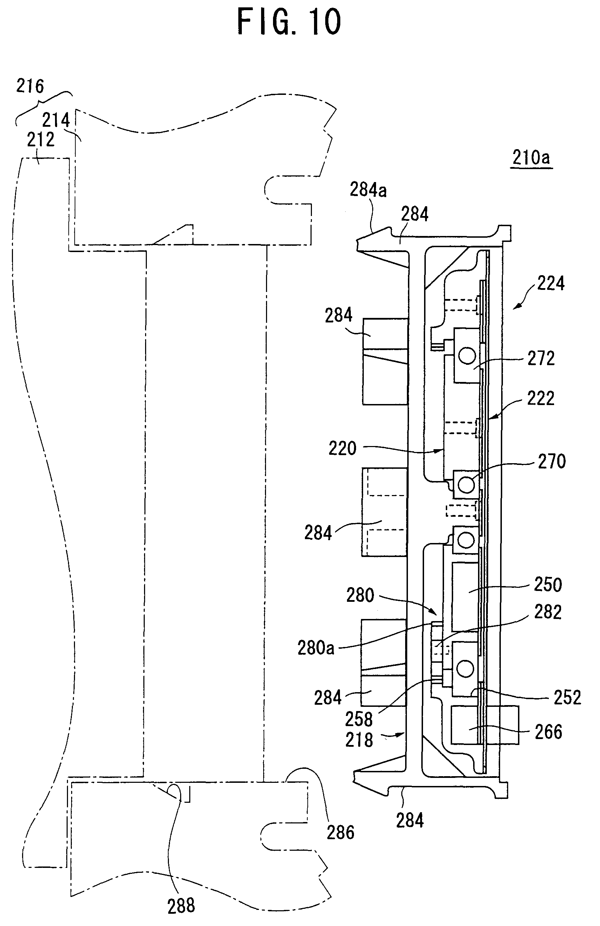

Next, a description will be given of the wheel mark 210 according to a first variation of the second embodiment of the present invention, with reference to FIG. 10.

FIG. 10 is a lateral cross-sectional view of a wheel mark 210a according to a first variation of the second embodiment of the present invention. It should be noted that in the wheel mark 210a, the individual compositional elements such as the mounting member 218, intermediate member 220, display plate 222 and case 224 that together form the wheel mark remain fundamentally unchanged from those of the wheel mark 210 according to the second embodiment of the present invention, and hence a number of elements have not been shown in the diagram in order to simplify description. The major difference between the two resides in a structure of a mounting of a gear 280 and a structure of a mounting of the wheel mark 210a on the wheel member 216.

In other words, in the wheel mark 210a, the gear 280 is rotatably joined to the axle 282, with the axle 282 mounted at an edge of one lateral surface of the intermediate member 220 so that an outer periphery of the gear 280 inscribes an outer periphery of the intermediate member 220. Teeth 280a of the gear 280 engage the teeth 258 of the display plate 222. Accordingly, when the display plate 222 rotates, the gear 280 revolves around the axle 282 that is fixedly mounted on the intermediate member 220.

It should be noted that, in this case, by positioning the axle 282 at a position along the axis of the intermediate member 220 (indicated as line L in FIG. 7A) without changing the diameter of the gear 282, or by reducing the diameter of the gear 282, the outer periphery of the gear 280 is positioned on the inside of the outer periphery of the intermediate member 220, and at the same time making the narrow-diameter portion of the through-hole portion 252 in the display plate 222 even narrower, the narrow portion of the through-hole portion 252 can be extended along the axis of the intermediate member 220. Additionally, by changing the shapes of the intermediate member 220 and the display plate 222 as appropriate, the junction of the display plate 222 and the gear 280 can be changed as appropriate.

Additionally, in the wheel mark 210a having the structure described above, a cylindrical member made of a flexible material and having a plurality of slits formed therein may be provided on one lateral surface of the mounting member 218, so as to provide a plurality of annular projecting portion 284. Outwardly projecting projections 284a are formed at a tip of the annular projecting portion 284. The wheel member 216 is configured such that a through-hole portion 286 is formed in a center of the wheel 214 fixedly mounted on the axle 212, with an annular concave portion 288 having a tapered opening formed on a wall of the through-hole portion 286.

Accordingly, the annular projecting portion 284 of the wheel mark 210a is bent inward and in that state inserted into the through-hole portion 288 of the wheel member 216. By eliminating the bend the annular projecting portion 284 returns to its original shape and is engaged by the annular concave portion 288, thus mounting the wheel mark 210a on the wheel member 216. In this case, the display plate 222 has approximately the same diameter as that of the so-called center cap ordinarily provided.

The wheel mark 210a according to the first variation of the second embodiment of the present invention as described above provides the same effects and advantages as the wheel mark 210 according to the second embodiment of the present invention as described above.

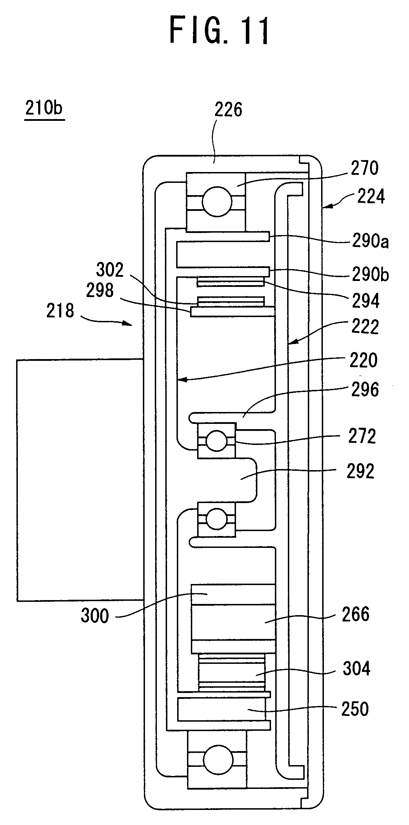

Next, a description will be given of a wheel mark 210b according to a second variation of a second embodiment of the present invention, with reference to FIG. 11. It should be noted that the constituent elements of the wheel mark 210b according to the second variation of the second embodiment are essentially unchanged from those of the wheel mark 210 according to the second embodiment of the present invention and hence a number of elements (in particular sealed chamber members and bolt through-holes) have not been shown in the diagram in order to simplify description. The major difference between the two is that the wheel mark 210b according to the second variation of the second embodiment of the present invention is that an inner surface of the mounting member 218 (the left side as depicted in FIG. 11) is flat.

The intermediate member 220 is essentially a disc, with two annular projecting portions 290a, 290b formed on an outer periphery of the intermediate member 220 and a central projection 292 formed in a center thereof. Gear teeth 294 are formed on an inner side of the annular projecting portion 290b and the intermediate member 220 is formed in the shape of a gear. A weight 250 is mounted between the annular projecting portions 290a and 290b in a lower part of the intermediate member 220. In this case, the rolling bearing 270 is provided between an outer peripheral wall 226 of the mounting member 218 and the annular projecting portion 290a of the intermediate member 220.

The display plate 222 is essential a disc, with a first cylindrical portion 296 formed on a central portion thereof and, at the same time, a second cylindrical portion 298 formed at a distance from the first cylindrical portion 296. A protruding portion 300 is formed on a lower part of the cylindrical portion 298 so as to be continuous with the cylindrical portion 298, with a weight 266 provided between the cylindrical portion 298 and the protruding portion 300.

The gear 304 is positioned so as to engage the inner periphery teeth 294 of the annular projecting portion 290b of the intermediate member 220 and the teeth 302 of the outer periphery of the cylindrical portion 298 of the display plate 222.

In the wheel mark 210b according to the second variation as described above, by providing a gear axially supported by the intermediate member 220 at the position of the gear 304 and eliminating the teeth 294 on the intermediate member 220, the same effects and advantages can be obtained as with the wheel mark 210a according to the first variation as described above.

It should be noted that the present invention is not limited to the second embodiment of the present invention and the first and second variations thereof as described above but may, for example, include two or more intermediate members as well as rolling bearings, in which case a gear is positioned between the display plate and the intermediate member that supports the display plate.

Additionally, as an easy method for mounting the wheel mark to the wheel member two-sided adhesive tape may be used to affix the wheel mark to the wheel member, with other, further variations also possible.

Additionally, in place of the above-described embodiments, in which the fixing member, the intermediate member, the display plate and the case are formed into a single integrated unit, it is also possible to attach in order the constituent members to the wheel member.

Additionally, in place of the above-described embodiments in which the individual members and bearings as a whole are covered by a case, the gaps between members as well as the bearing members can be individually sealed.

It should also be noted that attaching only a weight or weights without attaching gears can also achieve a certain proportion of the effects and advantages of the present invention.

FIG. 11 is a lateral cross-sectional view of the wheel mark according to a second variation of the second embodiment of the present invention.

The above description is provided in order to enable any person skilled in the art to make and use the invention and sets forth the best mode contemplated by the inventors of carrying out the invention.

The present invention is not limited to the specifically disclosed embodiments, and variations and modifications may be made without departing from the scope and spirit of the present invention.

The present application is based on Japanese Priority Application No. 11-312756, filed on December 3, 1999, and Japanese Priority Application No. 2000-091932, filed on March 29, 2000, the contents of which are hereby incorporated by reference.

## Claims

1. A static plate device (10) for mounting on a rotating body (16) so as to maintain a static state without becoming synchronized with a rotation of the rotating body (16), the static plate device (10) characterized by having:
a static plate (22);
a mounting member (18) for mounting the static plate (22) on the rotating body (16);
an intermediate member (20) disposed between the static plate (22) and the mounting member (18) so as to support the static plate (22) via a first bearing member (54), the intermediate member (20) being supported by the mounting member (18) via a second bearing member (56); and
a weight (50) provided on the static plate (22).

2. The static plate device (10) as claimed in claim 1, characterized in that the weight (50) is provided on the intermediate member (20).

3. The static plate device (10) as claimed in claim 1, characterized in that the intermediate member consists of two or more members (21a, 21b), each such intermediate member supporting the other via a third bearing member (54a, 54b) disposed between the intermediate members (21a, 21b).

4. The static plate device (10) as claimed in claim 3, characterized in that at least one of the intermediate members (21a, 21b) is provided with the weight (50).

5. The static plate device (10) as claimed in any one of claims 1 through 4, characterized in that at least one of the first and second bearing members (54, 56) is a rolling bearing.

6. The static plate device (10) as claimed in any one of claims 1 through 5, characterized in that a cover member (24) shields a gap between the mounting member (18) and the intermediate member (20), a gap between the static plate (22) and the intermediate member (20), and the first and second bearing members (54, 56).

7. A static plate device (210) for mounting on a rotating body (216) so as to maintain a static state without becoming synchronized with a rotation of the rotating body (216), the static plate device (210) characterized by having:
a static plate (222);
a mounting member (218) for mounting on the rotating body (216) that mounts the static plate (222);
an intermediate member (220) disposed between the static plate (222) and the mounting member (218) so as to support the static plate (222) via a first bearing member (254), the intermediate member (220) being supported by the mounting member (218) via a second bearing member (256); and
a gear (268),
the intermediate member (220) being formed in the shape of a gear and provided with a weight (250), the static plate (222) being formed in the shape of a gear and provided with a weight (266), the gear meshing (268) with the intermediate member (220) and the static plate (222) so as to revolve about an axial line of the mounting member (218).

8. A static plate device (210a) for mounting on a rotating body (216) so as to maintain a static state without becoming synchronized with a rotation of the rotating body (216), the static plate device (210a) characterized by having:
a static plate (222);
a mounting member (218) for mounting on the rotating body (216) that mounts the static plate (222);
an intermediate member (220) disposed between the static plate (222) and the mounting member (218) so as to support the static plate (222) via a first bearing member (270), the intermediate member (220) being supported by the mounting member (218) via a second bearing member (272); and
a gear (268) rotatably supported by the intermediate member (220),
the intermediate member (220) being provided with a first weight (250), the static plate (222) being formed in the shape of a gear and mounting a second weight (266), the gear engaging the static plate (222).

9. The static plate device (210) as claimed in either claim 7 or 8, characterized in that the intermediate member (220) consists of two or more members, each such intermediate member supporting the other via a third bearing member, the gear (268) being disposed between the intermediate member (220) that supports the static plate (222) and the static plate (222).

10. The static plate device (210) as claimed in any one of claims 7 through 9, characterized in that at least one of the bearing members (270, 272,) is a rolling bearing.

11. The static plate device (210) as claimed in any one of claims 7 through 10, characterized in that a cover member (224) shields a gap between the intermediate member (220) and the static plate (222) and a gap between the gear (268) and the bearing members (270, 272).

12. The static plate device as claimed in claim 7, characterized in that the rotating body (216) is a vehicle wheel.

13. A rotating body device mounting a rotating body (216) so as to maintain a static state without becoming synchronized with a rotation of the rotating body (216), the rotating body (216) characterized by having:
a static plate (222);
a mounting member (218) that mounts the static plate (222) on the rotating body (216);
an intermediate member (218) disposed between the static plate (222) and the mounting member (218) so as to support the static plate (222) via a first bearing member (270), the intermediate member being supported by the mounting member via a second bearing member (272); and
a weight (266) provided on the static plate (222).

14. The rotating body device as claimed in claim 13, characterized in that a cover member (224) shields a gap between the mounting member (218) and the intermediate member (220), a gap between the static plate (222) and the intermediate member (220), and the first and second bearing members (270, 272).

15. The rotating body device as claimed in claim 13, characterized in that the rotating body device is a vehicle wheel (216).
